# EUROPEAN PATENT SPECIFICATION

(11) **EP 1 131 788 B1**
(45) Date of publication and mention of the grant of the patent: **13.08.2003**
(21) Application number: 99953247.6
(22) Date of filing: 19.10.1999
(51) Int. Cl.: G06T 5/00

(54) **A METHOD FOR DISPLAYING NOTIFICATION THAT A COLOR CORRECTED IMAGE IS BEING VIEWED**
VERFAHREN ZUR WIEDERGABE EINER MITTELUNG BEI BETRACHTUNG EINES FARBKORRIGIERTEN BILDES
PROCEDE D'AFFICHAGE D'UNE NOTIFICATION INDIQUANT QU'UNE IMAGE A COULEURS CORRIGEES EST VISUALISEE

(30) Priority: 19.10.1998 US 104839 P
(43) Date of publication of application: 12.09.2001
(73) Proprietor: LightSurf Technologies, Inc., Santa Cruz, CA 95060 (US)
(72) Inventor: BERNARD, Peter, San Francisco, CA 94107-1699 (US); HILLIARD, William J., San Francisco, CA 94107-169 (US)
(74) Representative: Wombwell, Francis
(86) International application number: US9924577
(87) International publication number: WO00023944

(56) References cited:
- EP-A- 0 878 303
- EP-A- 0 889 636
- WO-A-98/37690
- PATENT ABSTRACTS OF JAPAN vol. 1998, no. 10, 31 August 1998 (1998-08-31) & JP 10 117290 A (FUJI XEROX CO LTD), 6 May 1998 (1998-05-06)

## Description

### BACKGROUND OF THE INVENTION

### 1. Field of the Invention

This invention relates generally to color imaging technology and more particularly to notification devices for indicating when a color correction image is being viewed. The same technique has applications for all sensory technology implemented on computers where there is commercial value in notifying end-users about whether that data has been personalized or corrected for their perception.

### 2. Description of the Prior Art

Conventional methods for color corrected digital images require the characterization of a video system used to create a digital image (source) and the characterization of a video or printing system that is displaying the color corrected image (client). This is typically done by matching the display properties of the source and client, either by mathematical transforms of respective color spaces or by forcing the source and client into a matching color state. A colorimetric system is essentially a system by which a color can be quantified. A colorimetric system can thus be used to characterize the color output of one color imaging system relative to other color imaging systems. The process of "characterizing" a color imaging system generally refers to the calculation of a color response, or input-output function for that particular color imaging system using the coordinates of the colorimetric system. A colorimetric system also facilitates transformation of color values to produce a color output in one color imaging system that matches the color output of a different color imaging system. The result of matching the display properties of the source and client is that the client is able to view the image with similar color characteristics as seen by the source author.

The tremendous popularity of the Internet has brought color imaging technology away from technicians in a single facility; and into the hands of low-involvement, mass market, consumers who are physically removed from the Web authoring process. This changes the requirements for imaging systems where previously there was no communication between content author or viewer, and no need for it. This method and apparatus address the new problem for both consumers and web merchants caused when consumers are unable to know anything about the color correction status of an image. For example, web-based shopping catalogs compete with printed catalogs for the same sales dollars. However, for web catalogs to compete effectively with their printed counterparts, they must provide consumers with the same level of benefits now enjoyed with catalogs in print. One is these benefits is color-corrected imagery consumes can trust. Thus, as color corrected images displayed over the Internet become more widely available to the general public, a method is needed to inform clients that their display system either is, or is not, currently displaying color-corrected images.

In an attempt to identify color corrected images, conventional images are color tagged with information, often in an International Color Consortium ("ICC") color profile format, before posting on a compact disc, web site, or other repository for later viewing, as is well known in the industry and defined by the ICC Profile Format Specification, Version 3.4-August 15, 1977, the contents of which are hereby incorporated by reference (latest version available at http://www.color.org). These images may even have some special watermark or logo indicating that they are authored in a manner enabling color accurate display, such as "authored with ColorSync®," or some similar logo..

Moreover, conventionally, Internet browsers, servers, and/or other image viewing software, such as Internet Explorer (version 4.01 and later) and Silicon Graphics ("SGI") Cosmo Color, can look for an ICC format color profile on the client or target display for use in color correcting the image seen. These browsers or viewers might have some logo or mark or technical description indicating that they offer "color accurate browser technology," indicating that they are enabled to display color-corrected images, under certain conditions.

The document EP-A-907283 discloses an image processing system wherein a color appearance index is notified to the user in accordance with viewing condition parameters of the user's system, equating the color appearance of a picture on an input device on the transmission side to that of a picture on an output device on the reception side.

Conventional approaches are generally deficient, however, in that end-users cannot rely on the above noted marks to know if in fact they are presently viewing an image in a color accurate state. For example, it may be such that the image was enabled for color correction but the browser and server technology do not enable the client to properly display the image. Conversely, the browser and/or server may be enabled to color correction for the client, but the image currently being viewed is not authored with use of ICC format profiles, or in some other way as to enable display with color accuracy. Thus, only when both the image authoring and image viewing technologies enable color correction is the image seen with color accuracy. Since conventional approaches fail to sufficiently inform an end-user client that a color correction process has actually occurred on a particular image, the end-user does not know whether a color accurate image is currently being viewed.

What is needed therefore is an apparatus and method for providing to an end user client feedback as to the color correction status of imagery shown on the client display. Although the current application of this apparatus and method relates to color-corrected imagery, a similar apparatus and method would be used related to any type of resolution or image correction, to correction of sound or auditory characteristics, to correction of feel characteristics as with the use of a joystick or other input device, or to any other human input (taste, smell), or any other correction of analog or sensory data.

### SUMMARY OF THE INVENTION

The present invention provides, a method for providing feedback to either a remote (i.e., physically at a different location, or connected via a client/server architecture or method), or a local (i.e., within a single location or computer) user as to color correction status of an image displayed on a system, including the steps of determining the presence of color correction information in the image, determining the state of calibration of the user's system, and notifying the user of color correction status in accordance with the steps of determining the presence of color correction information in the image and determining the state of calibration of the user's system. The invention is set out in appended claims 1, 27 and 37.

These and other features and advantages of this invention will become further apparent from the detailed description and accompanying figures that follow. In the figures and description, numerals indicate the various features of the invention, like numerals referring to like features throughout both the drawing figures and the written description.

### BRIEF DESCRIPTION OF THE DRAWINGS

FIG. 1 is a flow chart illustrating the method for providing end user (client) feedback as to the color correction status of imagery shown on the client display in accordance with the preferred embodiment of the invention.
FIG. 2 is a depiction of a screen view of a web page that is enabled to be color-corrected using an HTML tag in accordance with the method shown in FIG. 1.
FIG. 3 is a functional block diagram of a client-based notification system for providing critical end user feedback as to the color correction status of imagery on a client display.
FIG. 4 is a functional block diagram of a server-based notification system for providing critical end user feedback as to the color correction status of imagery on a client display.
FIG. 5(a) is a picture of a typical icon for notifying the user that the image has been color corrected on a client display in accordance with the present invention.
FIG. 5(b) is a picture of a typical icon for notifying the user that the image has not been color corrected on a client display in accordance with the present invention.

### DETAILED DESCRIPTION OF THE PREFERRED EMBODIMENT(S)

The present invention provides a system and method for providing end user (client) feedback as to the color correction status of imagery on a client display, thus notifying the user that the color image being viewed is color accurate. This information is critical since the end user is often in a remote location, separated in time and distance from the author of the image, and unable to know the characteristics of the imaged being viewed. In particular, the present invention automatically informs viewers and/or other receivers of digital images as to the state of color correction for the digital images, thus notifying a viewer of the visual integrity of the digital image being displayed. Consequently, viewers feel assured and secure about images they see as to the color accuracy of those images.

In particular, the present invention is implemented as a software process that is loaded into either an Internet browser or server technology. A browser is a client application that enables a user to view HTML (or equivalent) documents on the web, another network, or the user's computer. The software may be implemented in the form of a small program, such as Java or ActiveX application programs, that is loaded into a web browser, such as Microsoft's Internet Explorer or Netscape's Navigator. The software may also be implemented on server technology, such as Cosmo Color from Silicon Graphics. One skilled in the art will recognize that other conventional or newly developed software processes may be used as well and the invention may be implemented using hardware or a combination of hardware and software. One skilled in the art will recognize that the invention can apply to other browser technology, such as local CD browsers and other non-Internet browsers.

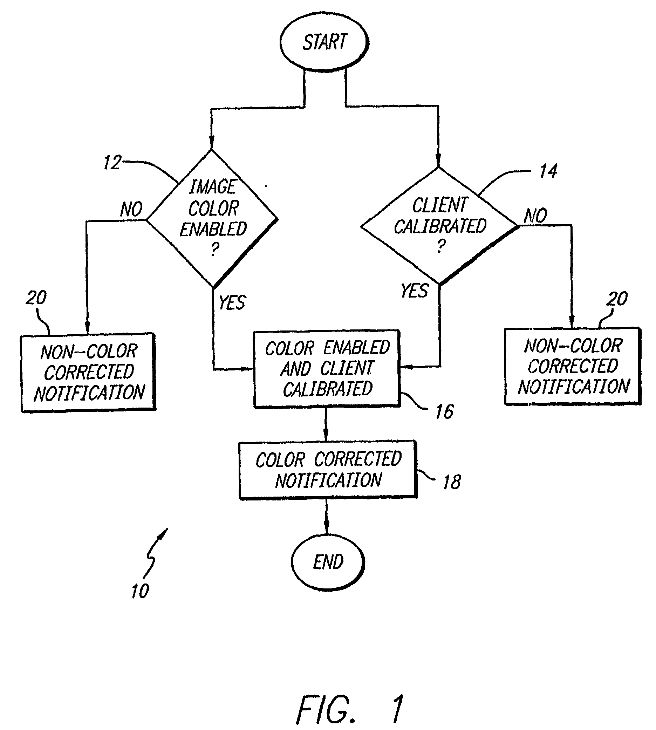

Referring to FIG. 1, a flowchart 10 of an algorithm for implementing the present invention is illustrated. The present invention is typically enabled when browser begins to reassemble the web page onscreen, following the hidden HTML codes in the main document to determine where to place text, graphics or videos onscreen. In particular, the present algorithm is implemented when browser begins to assemble the image part of the web page to be displayed. One skilled in the art, however, will recognize that implementation of the present invention can be initiated at anytime an image is present. The present invention initially determines whether the image has been color enabled (step 12) and whether the image has been color corrected (step 14). The present invention then determines the whether the system is acting in accordance with steps 12 and 14 above to provide color accuracy (step 16). Upon determining whether the image is color enabled (step 12) and corrected (step 14), notification is provided about the integrity of color imagery currently being viewed by the client at a specific web site. In particular, when the image is color enabled and corrected, notification is provided to the client that the color of the image is accurate (step 18). If the image is not either color enabled or corrected, notification is provided to the client that the color of the image may not be accurate (step 20). The invention then returns to a standby mode until another web page with images is detected.

As noted above, in step 12, the present invention determines whether the displayed image has been color enabled by detecting whether there is color correction information (i.e. color specific files for the device characteristics of the reference image as represented on the reference device) associated with the displayed image. For example, to detect whether an image is color enabled, the present invention detects whether the following color correction information (i.e. color specific files or registry entries) is associated with the image: (1) user specific Hypertext Markup Language (HTML) tags within the web page that designate the color properties of the source image, (2) standard ICC profiles which are embedded within the image file itself and (3) pointers to user specific (i.e. HTML) or standard (i.e. ICC profiles) color files associated with the image file. One skilled in the art will recognize that the present invention is not limited to detecting specific color correction information, nor is it limited just to fully composed web pages as opposed to individual images or portions of images.

In operation, to determine whether an image is color enabled via HTML color corrected information, the preferred embodiment of the present invention detects whether user selected predetermined HTML tags are present in the web page. HTML, a markup language used for documents on the web, uses standard tags to mark elements, such as text and graphics, in a document to indicate how web browsers should display these elements to the user and should respond to user actions. The present embodiment detects whether the web page includes predetermined HTML tags. For example, in the preferred embodiment, when a web page with an image is color enabled, the HTML tags direct a browser to display a predetermined text as a headline of a certain size, such as the title "True Internet Color":
- <html>: Marks the beginning and end of an HTML-coded file

- </head>: Contains descriptive information, like the title and author, not displayed onscreen. It also holds formatting information, such as style sheets.
- <title>: Shop-o-rama True Internet Color(r)</title> Sets the web page's title, displayed in the blue bar atop the screen
- </head>: Contains descriptive information, like the title and author, not displayed onscreen. It also holds formatting information, such as style sheets.
- <html>: Marks the beginning and end of an HTML-coded file

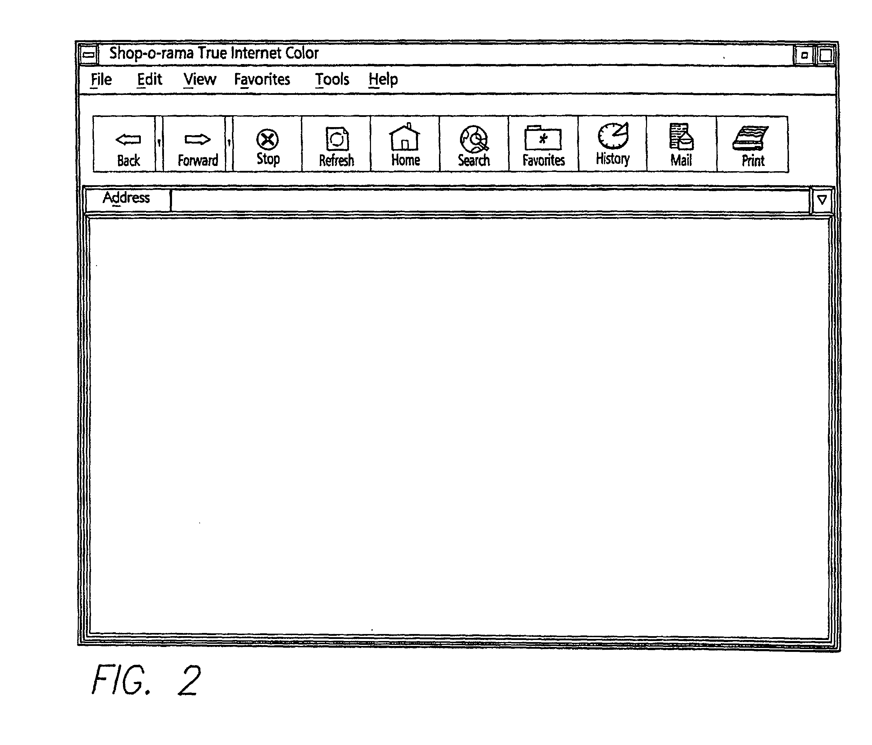

FIG. 2 is a depiction of a screen view of a web page 22 having a title "True Internet Color" thus enabling the present invention to recognize that the page is color enabled. Thus when a web page includes the title "True Internet Color" the image is considered to be color enabled. One skilled in the art will recognize that the present invention is not limited to recognition of HTML tags directed at the title "True Internet Color," but rather may be any predetermined HTML tag, or web image tag, configuration.

To determine whether an image is color enabled via ICC color correction information, the present invention detects whether ICC profiles (for the device characteristics of the reference image as represented on the reference device) are embedded within the image file based upon an ICC profile format specification. In particular, the present invention detects data stored in ICC profiles, which are described in the ICC profile specification. ICC profiles are device profiles that can be used in pairs to translate color data created on one device into a native color space of another device. More specifically, an ICC profile is provided for each device and is used by the present invention to transform color image data from a device-dependent color space to the profile connection space, and to transform color image data from the profile connection space to another device-dependent color space. These ICC profiles for the device characteristics of the reference image as represented on the reference device may be embedded in the image file or stored in a memory in a connected personal computer. For example, the ICC profiles could be stored in a memory, accessible by a CPU, and associated with the image instead of embedded. Additionally, it should be noted that ICC profile can be assessed by the client from a variety of other sources such as network interface or from other external devices via a modem interface.

To determine whether an image is color enabled―even without an embedded or associated color profile---the present invention detects whether the image is in a known color space, such as SRGB. SRGB is a well-defined color space, includes various versions such as SRGB 64, and is further defined at http://www.srgb.com. One skilled in the art will recognize that implementation of the present invention may be used with any kinds of images, including those subject to compression techniques, such as GIF, PNG or JPEG formatted images.

Referring to step 14, the present invention interrogates the client system to determine if that system is characterized and calibrated to the same state, or to a different but known state. In other words, the present invention detects the presence of a transfer function in the client system, i.e. in the hardware or software (or the combination of hardware/software and human perception). In particular, the present invention checks file entries and registries, or pointers to such entries and registries, to determine whether characterization parameters are present. A flag, initialized to a set value, signals whether the client system has been characterized. For example, in a typical embodiment, a binary flag initialized to a zero value is set to a non-zero value when the present invention detects the client system is characterized. In accordance with the present invention, a client may use any type of conventional or newly developed color calibration system including, for example, the interactive color calibration method disclosed in U.S. Patent No. 5,638,117.

Referring to step 16, the present invention then determines the whether the system is acting in accordance with steps 12 and 14 above to provide color accuracy. In particular, once the present invention confirms that the presence of color correction information in the displayed image (step 12) and the image has been adjusted, as needed, to display properly on the calibrated or characterized client system (step 14) (i.e. color accuracy is being provided for in step 16), a notification is displayed to the user (step 18). When the software process determines that color accurate display is occurring on all or part of the image, then an appropriate notification is made to inform the user that color correction has occurred where marked. One skilled in the art will recognize that the particular type of notification is not critical to the invention. The notification may be visual or non-visual notification (e.g. audio). For example, the visual notification may be an icon that provides users with a visible indication about the integrity of color imagery currently being viewed by the client at a specific web site. It does this by briefly flashing the cursor for a fraction of a second to indicate if whether or not the page is being viewed utilizing color correction. This icon can be implemented in addition, or instead, in the OS, in a web-enabled application, or in a browser (when implemented on as a client-side application); or it can be implemented as an image, tag, program, or watermark embedded within a web page by the web server or by any of the links between server and client within the network infrastructure.

For example, when a user requests a Web page from a web site enabled by the present invention, the HTML is sent to the client directly from the web site's main servers. A specially attached URL link calls up color-corrected images from the hosted server, and the client's browsers integrate the two pieces automatically. Thus, in accordance with the present invention, the notification not only provides notification feedback to the user, but also reinforces a message of data fidelity to the end-user in determining whether the color data is accurate or not. The present invention has applicability for any client viewing or display application where color accuracy is important to the communication of information. Examples include, but are not limited to, viewing artwork, fashion, cosmetic, logo or brand colors, paint, photography and other color-sensitive information over a medium such as the Internet where content viewer and content creator are disconnected by physical space and/or time. Although, for illustrative purposes, the present invention is described and illustrated utilizing web pages hosted on a server and displayed with color correction on a client, the invention is not limited to such a configuration. Rather, the present invention would apply equally well to images displayed on any imaging peripheral including transmissive, reflective, and other source and/or client imaging technologies. Moreover, the present invention would also apply to images not viewed by the Internet, such as images within computer applications, TV, broadcast, or other client output media of any kind, including printed output. The present method would apply to both digital images and analog images including both real and synthetic images authored for, and/or viewed on, a client system.

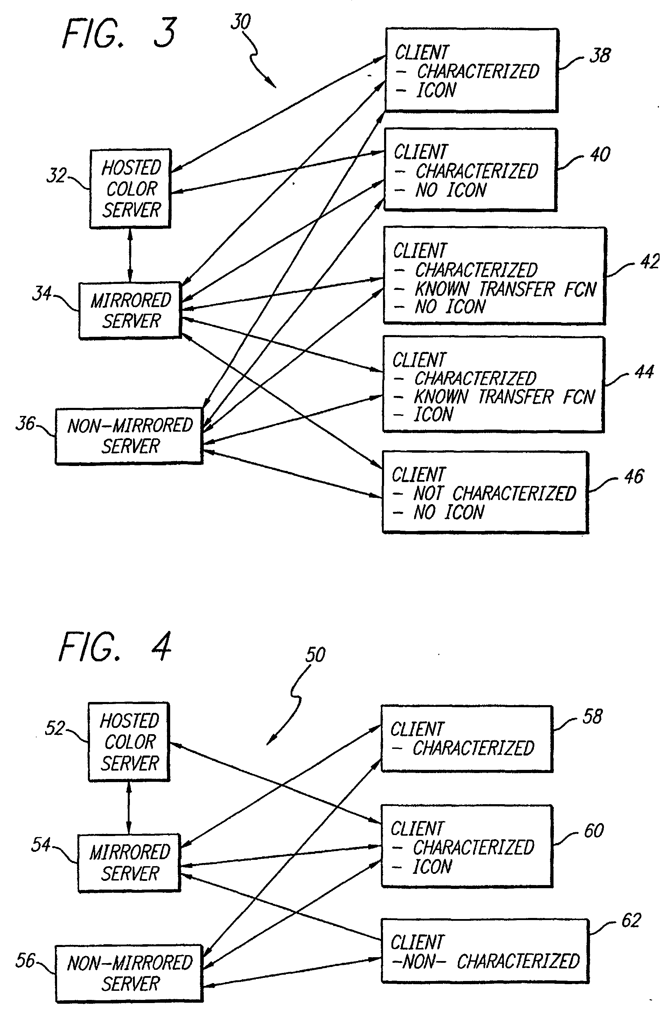

The present invention may be implemented as a client-based notification system 30 as shown in FIG. 3 or server-based notification system 50 as shown in FIG. 4. With respect to a client-based notification system, the present invention may be installed on a client system such as client 38, peripheral, and/or other output technology that has various states of visual display to notify the user about the state of color correction for digital images output or displayed. Referring to FIG. 3, a functional block diagram of a client-based notification system 30 for providing critical end user feedback as to the color correction status of imagery on a client display is illustrated. Client-based notification system 30 is shown with hosted color server 32, mirrored server 34, non-mirrored server 36 and clients 38, 40, 42, 44 and 46 which represent the various types of clients, that is, clients such as 38 and 40 which include the client based notification techniques of the present invention (indicated by the term "icon"), clients 38, 40, 42 and 44 which are characterized for color, clients 42 and 44 which have a known transfer function and client 46 which is not characterized, has no known color transfer function and does not include a notification system according to the present invention.

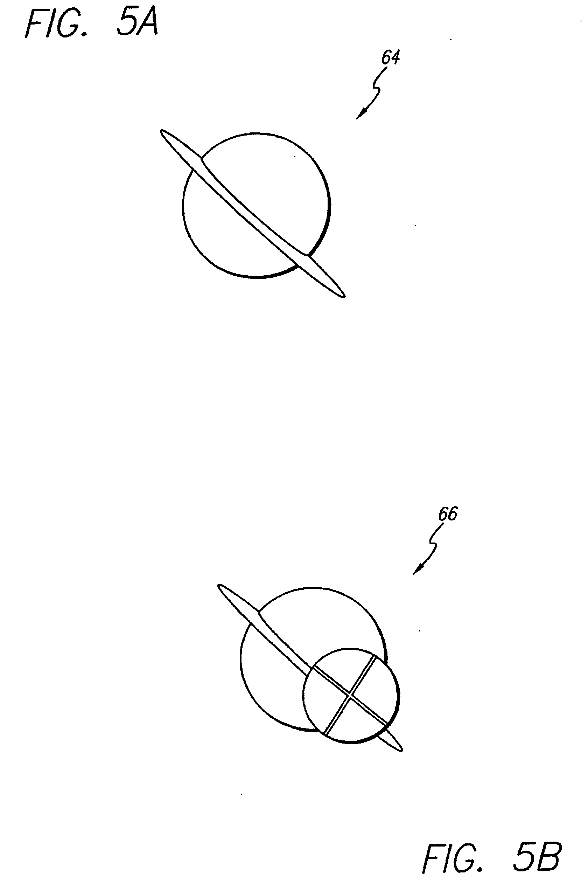

Icon 66 depicted in Fig. 5(b), provided by client 38 is preferably initiated to a non-corrected state. When client 38 sends a request to mirrored server 34, which mirrors hosted color server 32, a color corrected requested image is sent from hosted color server 32 to client 38 including a color notification tag, such as a specific HTML title bar flag. The Web page HTML from server 34 includes a color notification tag within its HTML tags to indicate in the title bar that the images to be sent by server 32 have been enabled for color correction. For example, as shown in FIG. 2, the title bar of the web page may include a notification in its title bar, such as "True Internet Color", in addition to other terms such as the name of a related company, to indicate color correction. As noted above, one skilled in the art will recognize that the present invention is not limited to the detection of predetermined HTML title tags, rather, any device capable of detection may be used as the color notification tag. Upon arrival at the client 38, the present invention detects the color notification tag by evaluating the HTML tags sent from server 34 to determine whether the image delivered from server 32 has been color correction enabled by detecting the True Internet Color tag in the title. It also checks whether client 38 has been color characterized or calibrated to a known state. If both conditions are true, an icon such as icon 66 depicted in FIG. 5(b) is changed to a corrected state as depicted by icon 64 in FIG. 5(a). In contrast, when client 38 sends a request to a site providing non color corrected pages, such as non-mirrored server 36, which does not include the special HTML tags, such as "True Internet Color" to indicate color correction, then icon 66 remains unchanged from its non-corrected default state.

Still referring to FIG. 3, local client 40 includes no applet incorporating the present invention for notification as indicated by the phrase "no-icon". Local client 40 is in direct communication with mirrored server 34 and hosted color server 32. Local client 40 provides no notification icon. When local client 40 sends a request to mirrored server 34, the requested image is color corrected and sent back by hosted color server 32, with no notification icon on client 40. When local client 40 communicates with non-mirrored server 36, the requested image is not color corrected, and there is no notification icon to this effect.

Client 42 includes a known (characterized or calibrated) transfer function but no applet incorporating the present invention for notification. Client 42 is in direct communication with mirrored server 34 and non-mirrored server 36 and in direct communication with hosted color server 32 via redirection requests from mirrored server 34. Client 42 provides no notification icon. When client 42 sends a request to mirrored server 34, the requested image is corrected. However, no notification indicating color correction is sent back to client 42. When client 42 sends a request to non-mirrored server 36, the requested image is not color corrected and no notification of color correction is sent back to client 42. In such case, the title bar of the web page would not indicate a color corrected image.

Client 44 includes a known (characterized or calibrated) transfer function and includes an applet incorporating the present invention for notification. Client 44 is in direct communication with mirrored server 34 and non-mirrored server 36 and in direct communication with hosted color server 32 via redirection requests from mirrored server 34. Client 44 provides a notification icon. When client 44 sends a request to mirrored server 34, the requested image sent by hosted color server 32 is color corrected. In such case, the title bar of the web page would indicate a color corrected image. Notification indicating color correction is sent back to client 44 indicating a color corrected image being displayed. When client 44 sends a request to non-mirrored server 36, the requested image is not corrected and no notification of color correction is sent back to client 44. In such case, the title bar of the web page would not indicate a color corrected image.

Client 46 includes an application incorporating the present invention for notification. Client interacts with non-mirrored server 36 only and provides no notification icon. When client 46 sends a request to non-mirrored server 36, which is not in mirror communication with hosted color server 32, the requested image sent by non-mirrored server 36 is not color corrected and no notification is provided to the client 46. In such case, the title bar of the web page would not indicate a color corrected image.

Referring now to FIG. 4, a functional block diagram of a server-based notification system 50 for providing critical end user feedback as to the color correction status of imagery on a client display is illustrated. With respect to a server-based notification system, the present invention may be installed on a web site server to notify the user about the state of color correction for digital images output or displayed. In particular, the icon of the present invention can be implemented in an image, tag, program, or watermark embedded within a web page by the web server or any of the links between server and client within the network infrastructure. Server-based notification system 50 is shown with hosted color server 52, mirrored server 54, non-mirrored server 56 and clients 58, 60, 62 and 64. The icon of the present invention is installed in hosted color server 52 and mirrored server 54 and not in non-mirrored server 56.

When client 58 sends a request to hosted 52, client 58 may communicate through some means that it is a client that is of a specific, known calibration. This notification may be included in the HTML stream sent by the browser, or via any other method. In that case, if a color corrected image is sent from hosted color server 52 (or from mirrored server 54) to client 58, then an icon is also sent by mirrored server 54 or by hosted color server 52 to indicate that the image has been corrected. In contrast, when client 58 sends a request to non-mirrored server 56, which is not in communication with hosted color server 52, non-mirrored server 56 does not include an icon (or sends an icon indicating that no color correction has occurred).

In accordance with an alternative embodiment of the invention, client 60 includes an applet incorporating the present invention for providing notification. Local client 60 is in direct communication with mirrored server 54 or hosted color server 52, which also includes the notification icon. When client 60 sends a request to mirrored server 54 or hosted color server 52 as described above, the requested image is color corrected and sent back by web site server along with a notification icon indicating a corrected state. Mirrored server 54 also sends the HTML tags indicating color correction and the icon on client is changed to indicate the corrected state. Logic is implemented to arbitrate between the state of the two icons (server-based and client-based). For example, in one embodiment either the server or client based notification icon may take precedence while in another embodiment a third icon, similar to the icons shown in FIGS. 5(a) and (b), may be used to indicate the presence of a different level of color correction based on the presence of both server and client based notifications.

Client 62 includes an application incorporating the present invention for notification. When client 62 sends a request to server 54, then either server 52 would use HTML tags to add some watermark or other image to the web page to indicate color accuracy; or server 52 would request web server 54 to send an image which already has an icon superimposed on the image sent by server 54. When client 62 sends a request to non-mirrored server 56, the requested image sent by non-mirrored server 56 is not color corrected and no notification is provided to client 62. In such case, the title bar of the web page would not indicate a color corrected image, and no icon would be sent by non-mirrored server 56.

In accordance with an alternative embodiment of the present invention, depending upon the relationship between the mirrored server 54 and hosted color server 52, hosted color server 52 may require mirrored server 54 to identify images not color corrected. In such case, a server based icon can be sent to a client to indicate images which are not color corrected.

In accordance with another alternative embodiment of the present invention, multilevel icon certifications may be provided. In particular, multilevel icon certifications can be utilized to distinguish between icon certifications between various entities providing for color correction. For example, when hosted color server 52 provides color correction, an icon identifying not only color correction, but correction specifically provided by a particular hosted color server, is sent to the client. On the other hand, if color correction is provided by another entity, an icon identifying color correction, without identification of a specific entity providing for correction, is sent to the client.

Having now described the invention in accordance with the requirements of the patent statutes, those skilled in the art will understand how to make changes and modifications in the present invention to meet their specific requirements or conditions.

## Claims

1. A method for providing feedback to a user as to color correction status of an image on a local display, comprising the steps of:
determining presence of color correction information in said image;
determining state of calibration of said user's system;
notifying said user of color correction status in accordance with said steps of determining the presence of color correction information in said image and determining state of calibration of said user's system.

2. The method claimed in claim 1, wherein said method is implemented in a software process loaded into an Internet browser.

3. The method claimed in claim 1, wherein said method is implemented in a software process loaded into a content browsing application..

4. The method claim in claim 1, wherein said method is implemented in a software process loaded into server technology that is viewed by a remote client.

5. The method claimed in claim 1, wherein said method is implemented in a software process loaded into server technology that is viewed by a local client.

6. The method in claim 1, wherein said method is implemented both as a software process loaded into a content browsing application and server technology approximately simultaneously, together with an arbitration mechanism to determine the proper notification of status.

7. The method claimed in claim 1, wherein said color correction information comprises HTML color information.

8. The method claimed in claim 1, wherein said information on the state of calibration of said end users' system comprises HTML color information.

9. The method claimed in claim 1, wherein said step of determining presence of color correction information in said image, further comprises the step of:
detecting whether HTML tags that designate color properties are present in a web page associated with said image.

10. The method claimed in claim 1, wherein said step of determining presence of color correction information in said image, further comprises the step of detecting whether HTML tags that designate color properties are sent via one server, referencing said image sent by a different server.

11. The method in claimed in claim 1, wherein the information about the state of calibration of said user's system is determined by said server by detecting HTML tags sent by said server.

12. The method claimed in claim 1, wherein said color correction information comprises ICC profile color correction information.

13. The method claimed in claim 1, wherein the information about the state of calibration of said user's system comprises ICC-format profile information.

14. The method claimed in claim 1, wherein said step of determining presence of color correction information in said image, further comprises the step of:
detecting whether ICC profiles are embedded within the image, or associated with the file, based upon ICC profile format specifications.

15. The method claimed in claim 1, wherein said step of determining presence of color correction information in said image, further comprises the step of:
detecting GIF-formatted images based upon GIF profile format specifications.

16. The method claimed in claim 1, wherein said step of determining presence of color correction information in said image, further comprises the step of:
detecting PNG-formatted images based upon PNG profile format specifications.

17. The method claimed in claim 1, wherein said step of determining presence of color correction information in said image, further comprises the step of:
detecting JPEG-formatted images based upon JPG profile format specifications.

18. The method claimed in claim 1, wherein said step of determining presence of color correction information in said image, further comprises the step of:
detecting images in a known color space.

19. The method claimed in claim 1, wherein said step of determining presence of color correction information in said image, further comprises the step of:
detecting images in a predefined color space.

20. The method claimed in claim 1, wherein said step of notifying said user of color correction status in accordance with said steps of determining the presence of color correction information in said image and determining state of calibration of said user's system, further comprises the step of:
providing a visual notification regarding the status of color correction status of said image.

21. The method claimed in claim 20, wherein said visual notification is an icon.

22. The method claimed in claim 1, wherein said step of notifying said user of color correction status in accordance with said steps of determining the presence of color correction information in said image and determining state of calibration of said user's system, further comprises the step of:
providing auditory notification regarding the status of color correction status of said image.

23. The method claimed in claim 1, wherein said step of notifying said user of color correction status in accordance with said steps of determining the presence of color correction information in said image and determining state of calibration of said user's system, further comprises the step of:
providing sensory notification regarding color correction status of said image.

24. The method claim claimed in claim 23, wherein said step of providing sensory notification regarding the status of color correction status of said image, further comprises the step of:
providing touch-based notification regarding color correction status of said image.

25. The method claim claimed in claim 23, wherein said step of providing sensory notification regarding the status of color correction status of said image, further comprises the step of:
providing taste-based notification regarding color correction status of said image.

26. The method claim claimed in claim 23, wherein said step of providing sensory notification regarding the status of color correction status of said image, further comprises the step of:
providing smell-based notification regarding color correction status of said image.

27. A client based icon applet for use in indicating to an end user a state of color correction of digital images being viewed, comprising:
an icon having a first state indicating that images being viewed are color corrected as viewed and a second state indicating that images being viewed are not color corrected as viewed; and
logic for determining (a) if the image being viewed includes a color notification tag and (b) a display device associated with the use is calibrated for corrected color display, for inserting a selected state of the icon to be inserted in the digital image to be viewed,
wherein said logic for determining if the image being viewed includes a color notification tag and a display device associated with the use is calibrated for corrected color display for inserting a selected state of the icon to be inserted in the digital image to be viewed further comprises:
logic for evaluating HTML tags sent by a server to determine whether said image has been color corrected.

28. The client based icon applet claimed in claim 27, wherein said icon is initiated to the second state indicating that images being viewed are not color corrected as being viewed as a default state.

29. The client based icon applet claimed in claim 27, wherein said logic for evaluating HTML tags sent by a server to determine whether said image has been color corrected further comprises:
logic for evaluating predetermined HTML title tags sent by a server to determine whether said image has been color corrected.

30. The client based icon applet claimed in claim 27, wherein said logic for determining if the image being viewed includes a color notification tag and a display device associated with the use is calibrated for corrected color display for inserting a selected state of the icon to be inserted in the digital image to be viewed further comprises:
logic for detecting the presence of a transfer function in a client system.

31. The client based icon applet claimed in claim 27, wherein said logic for determining if the image being viewed includes a color notification tag and a display device associated with the use is calibrated for corrected color display for inserting a selected state of the icon to be inserted in the digital image to be viewed further comprises:
logic for detecting the presence of characterization parameters.

32. The client based icon applet claimed in claim 27, further comprising:
a flag having a first state indicating that the display devices associated with the use is calibrated for corrected color display and a second state indicating that the display devices associated with the use is not calibrated for corrected color display; and
logic for determining if the display device associated with the use is calibrated for corrected color display for determining a selected state of the flag.

33. The client based icon applet claimed in claim 27, wherein said logic for determining if the image being viewed includes a color notification tag and a display device associated with the use is calibrated for corrected color display for inserting a selected state of the icon to be inserted in the digital image to be viewed further comprises:
logic for inserting the icon having the first state indicating that images being viewed are color corrected and the display device associated with the use is calibrated for corrected color display.

34. The client based icon applet claimed in claim 27, wherein said logic for determining if the image being viewed includes a color notification tag and a display device associated with the use is calibrated for corrected color display for inserting a selected state of the icon to be inserted in the digital image to be viewed further comprises:
logic for inserting the icon having the second state indicating that images being viewed are not color corrected or the display device associated with the use is not calibrated for corrected color display.

35. The client based icon applet claimed in claim 28, wherein said logic for determining if the image being viewed includes a color notification tag and a display device associated with the use is calibrated for corrected color display for inserting a selected state of the icon to be inserted in the digital image to be viewed further comprises:
logic for leaving the icon in the default second state indicating that images being viewed are not color corrected or the display device associated with the use is not calibrated for corrected color display.

36. The client based icon applet claimed in claim 27, wherein said icon also identifies color correction by a particular server.

37. A server based icon applet for use in indicating to an end user a state of color correction of digital images being viewed, comprising:
an icon having a first state indicating that images being viewed are color corrected as viewed and a second state indicating that images being viewed are not color corrected as viewed; and
logic for determining if a client has a specific, known calibration for inserting a selected state of the icon to be inserted in the digital image to be viewed.

38. The server based icon applet claimed in claim 37, wherein said logic for determining if a client has a specific, known calibration for inserting a selected state of the icon to be inserted in the digital image to be viewed further comprises:
logic for determining the presence of an HTML stream sent by a browser associated with said client.

39. The server based icon applet claimed in claim 38, wherein said logic for determining the presence of an HTML stream sent by a browser associated with said client further comprises:
logic for inserting the icon having the first state indicating that images being viewed are color corrected when a HTML stream is detected.

40. The server based icon applet claimed in claim 38, wherein said logic for determining the presence of an HTML stream sent by a browser associated with said client further comprises:
logic for inserting the icon having the second state indicating that images being viewed are not color corrected when a HTML stream is not detected.

## Patentansprüche

1. Ein Verfahren zum Bereitstellen einer Rückmeldung an einen Benutzer bezüglich eines Farbkorrekturstatus eines Bildes auf einer lokalen Anzeige, umfassend die Schritte:
Bestimmen eines Vorhandenseins von Farbkorrekturinformationen in dem Bild;
Bestimmen eines Kalibrierungszustands des Systems des Benutzers;
Benachrichtigen des Benutzers über den Farbkorrekturstatus in Übereinstimmung mit den Schritten des Bestimmens des Vorhandenseins von Farbkorrekturinformationen in dem Bild und des Bestimmens eines Kalibrierungszustands des Systems des Benutzers.

2. Das Verfahren nach Anspruch 1, wobei das Verfahren in einem in einen Internet-Browser geladenen Software-Prozeß implementiert ist.

3. Das Verfahren nach Anspruch 1, wobei das Verfahren in einem in eine Inhalts-Browsing-Anwendung geladenen Software-Prozeß implementiert ist.

4. Das Verfahren nach Anspruch 1, wobei das Verfahren in einem Software-Prozeß implementiert ist, der in eine Server-Technologie geladen ist, die von einem fernen Client betrachtet wird.

5. Das Verfahren nach Anspruch 1, wobei das Verfahren in einem Software-Prozeß implementiert ist, der in eine Server-Technologie geladen ist, die von einem lokalen Client betrachtet wird.

6. Das Verfahren nach Anspruch 1, wobei das Verfahren sowohl als in eine Inhalts-Browsing-Anwendung als auch in eine Server-Technologie etwa gleichzeitig geladenen Software-Prozeß zusammen mit einem Entscheidungsmechanismus zum Bestimmen der geeigneten Benachrichtigung des Status implementiert ist.

7. Das Verfahren nach Anspruch 1, wobei die Farbkorrekturinformationen HTML-Farbinformationen umfassen.

8. Das Verfahren nach Anspruch 1, wobei die Informationen über den Kalibrierungszustand des Systems des Endbenutzers HTML-Farbinformationen umfassen.

9. Das Verfahren nach Anspruch 1, wobei der Schritt des Bestimmens eines Vorhandenseins von Farbkorrekturinformationen in dem Bild ferner umfaßt den Schritt eines:
Erfassens, ob HTML-Tags, die Farbeigenschaften kennzeichnen, in einer Web-Seite, die dem Bild zugeordnet ist, vorhanden sind.

10. Das Verfahren nach Anspruch 1, wobei der Schritt des Bestimmens eines Vorhandenseins von Farbkorrekturinformationen in dem Bild ferner den Schritt umfaßt eines Erfassens, ob HTML-Tags, die Farbeigenschaften kennzeichnen, gesendet wurden über einen Server, wobei sie Bezug nehmen auf das von einem anderen Server gesendete Bild.

11. Das Verfahren nach Anspruch 1, wobei die Informationen über den Kalibrierungszustand des Systems des Benutzers von dem Server bestimmt werden, indem von dem Server gesendete HTML-Tags erfaßt werden.

12. Das Verfahren nach Anspruch 1, wobei die Farbkorrekturinformationen ICC-Profil-Farbkorrekturinformationen umfassen.

13. Das Verfahren nach Anspruch 1, wobei die Informationen über den Kalibrierungszustand des Systems des Benutzers ICC-Format-Profilinformationen umfassen.

14. Das Verfahren nach Anspruch 1, wobei der Schritt des Bestimmens eines Vorhandenseins von Farbkorrekturinformationen in dem Bild ferner den Schritt umfaßt eines:
Erfassens, ob ICC-Profile in dem Bild eingebettet oder der Datei zugeordnet sind, auf der Grundlage von ICC-Profilformatspezifikationen.

15. Das Verfahren nach Anspruch 1, wobei der Schritt des Bestimmens eines Vorhandenseins von Farbkorrekturinformationen in dem Bild ferner umfaßt den Schritt eines:
Erfassens von GIF-formatierten Bildern auf der Grundlage von GIF-Profilformatspezifikationen.

16. Das Verfahren nach Anspruch 1, wobei der Schritt des Bestimmens eines Vorhandenseins von Farbkorrekturinformationen in dem Bild ferner umfaßt den Schritt eines:
Erfassens von PNG-formatierten Bildern auf der Grundlage von PNG-Profilformatspezifikationen.

17. Das Verfahren nach Anspruch 1, wobei der Schritt des Bestimmens eines Vorhandenseins von Farbkorrekturinformationen in dem Bild ferner umfaßt den Schritt eines:
Erfassens von JPEG-formatierten Bildern auf der Grundlage von JPG-Profilformatspezifikationen.

18. Das Verfahren nach Anspruch 1, wobei der Schritt des Bestimmens eines Vorhandenseins von Farbkorrekturinformationen in dem Bild ferner umfaßt den Schritt eines:
Erfassens von Bildern in einem bekannten Farbraum.

19. Das Verfahren nach Anspruch 1, wobei der Schritt des Bestimmens eines des Vorhandenseins von Farbkorrekturinformationen in dem Bild ferner umfaßt den Schritt eines:
Erfassens von Bildern in einem vordefinierten Farbraum.

20. Das Verfahren nach Anspruch 1, wobei der Schritt des Benachrichtigens des Benutzers über den Farbkorrekturstatus in Übereinstimmung mit den Schritten des Bestimmens eines Vorhandenseins von Farbkorrekturinformationen in dem Bild und des Bestimmens eines Kalibrierungszustands des Systems des Benutzers ferner umfaßt den Schritt eines:
Bereitstellens einer visuellen Benachrichtigung bezüglich des Farbkorrekturstatus des Bildes.

21. Das Verfahren nach Anspruch 20, wobei die visuelle Benachrichtigung ein Icon ist.

22. Das Verfahren nach Anspruch 1, wobei der Schritt des Benachrichtigens des Benutzers über dem Farbkorrekturstatus in Übereinstimmung mit den Schritten des Bestimmens eines Vorhandenseins von Farbkorrekturinformationen in dem Bild und des Bestimmens eines Kalibrierungszustands des Systems des Benutzers ferner umfaßt den Schritt eines:
Bereitstellens einer hörbaren Benachrichtigung bezüglich des Farbkorrekturstatus des Bildes.

23. Das Verfahren nach Anspruch 1, wobei der Schritt des Benachrichtigens des Benutzers über den Farbkorrekturstatus in Übereinstimmung mit den Schritten des Bestimmens eines Vorhandenseins von Farbkorrekturinformationen in dem Bild und des Bestimmens eines Kalibrierungszustands des Systems des Benutzers ferner umfaßt den Schritt eines:
Bereitstellens einer sensorischen Benachrichtigung bezüglich des Farbkorrekturstatus des Bildes.

24. Das Verfahren nach Anspruch 23, wobei der Schritt des Bereitstellens einer sensorischen Benachrichtigung bezüglich des Farbkorrekturstatus des Bildes ferner umfaßt den Schritt eines:
Bereitstellens einer berührungsbasierten Benachrichtigung bezüglich des Farbkorrekturstatus des Bildes.

25. Das Verfahren nach Anspruch 23, wobei der Schritt des Bereitstellens einer sensorischen Benachrichtigung bezüglich des Farbkorrekturstatus des Bildes ferner umfaßt den Schritt eines:
Bereitstellens einer geschmacksbasierten Benachrichtigung bezüglich des Farbkorrekturstatus des Bildes.

26. Das Verfahren nach Anspruch 23, wobei der Schritt des Bereitstellens einer sensorischen Benachrichtigung bezüglich des Farbkorrekturstatus des Bildes ferner umfaßt den Schritt eines:
Bereitstellens einer geruchsbasierten Benachrichtigung bezüglich des Farbkorrekturstatus des Bildes.

27. Ein client-basiertes Icon-Applet zur Verwendung beim Anzeigen eines Zustands einer Farbkorrektur digitaler Bilder an einen Endbenutzer bei der Betrachtung, aufweisend:
ein Icon, das einen ersten Zustand aufweist, der anzeigt, daß gerade betrachtete Bilder so, wie sie betrachtet werden, farbkorrigiert sind, und einen zweiten Zustand, der anzeigt, daß gerade betrachtete Bilder so, wie sie betrachtet werden, nicht farbkorrigiert sind; und
eine Logik zum Bestimmen, (a) ob das betrachtete Bild ein Farbbenachrichtigungs-Tag enthält und (b) ob eine der Benutzung zugeordnete Anzeigeeinrichtung für eine korrigierte Farbanzeige kalibriert ist, zum Einsetzen eines ausgewählten Zustands des in das zu betrachtende digitale Bild einzusetzenden Icons,
wobei die Logik zum Bestimmen, ob das betrachtete Bild ein Farbbenachrichtigungs-Tag enthält und eine der Verwendung zugeordnete Anzeigeeinrichtung für eine korrigierte Farbanzeige kalibriert ist, zum Einsetzen eines ausgewählten Zustands des in das zu betrachtende digitale Bild einzusetzenden Icons ferner aufweist:
eine Logik zum Auswerten von HTML-Tags, die von einem Server gesendet worden sind, um zu bestimmen, ob das Bild farbkorrigiert worden ist.

28. Das client-basierte Icon-Applet nach Anspruch 27, wobei das Icon in den zweiten Zustand als Standardzustand initiiert wird, der anzeigt, daß gerade betrachtete Bilder so, wie sie betrachtet werden, nicht farbkorrigiert sind.

29. Das client-basierte Icon-Applet nach Anspruch 27, wobei die Logik zum Auswerten von durch einen Server gesendeten HTML-Tags zum Bestimmen, ob das Bild farbkorrigiert worden ist, ferner aufweist:
eine Logik zum Auswerten vorgegebener von einem Server gesendeter HTML-Titel-Tags zum Bestimmen, ob das Bild farbkorrigiert worden ist.

30. Das client-basierte Icon-Applet nach Anspruch 27, wobei die Logik zum Bestimmen, ob das betrachtete Bild ein Farbbenachrichtigungs-Tag enthält und ob eine der Verwendung zugeordnete Anzeigeeinrichtung für eine korrigierte Farbanzeige kalibriert ist, zum Einsetzen eines ausgewählten Zustands des in das zu betrachtende digitale Bild einzusetzenden Icons ferner aufweist:
eine Logik zum Erfassen des Vorhandenseins einer Übertragungsfunktion in einem Client-System.

31. Das client-basierte Icon-Applet nach Anspruch 27, wobei die Logik zum Bestimmen, ob das betrachtete Bild ein Farbbenachrichtigungs-Tag enthält und eine der Verwendung zugeordnete Anzeigeeinrichtung für eine korrigierte Farbanzeige kalibriert ist, zum Einsetzen eines ausgewählten Zustands des in das zu betrachtende digitale Bild einzusetzenden Icons ferner aufweist:
eine Logik zum Erfassen des Vorhandenseins von Charakterisierungsparametern.

32. Das client-basierte Icon-Applet nach Anspruch 27, ferner aufweisend:
ein Flag, das einen ersten Zustand aufweist, der anzeigt, daß die der Verwendung zugeordnete Anzeigeeinrichtung für eine korrigierte Farbanzeige kalibriert ist, und zweiten Zustand, der anzeigt, daß die der Verwendung zugeordnete Anzeigeeinrichtung nicht für eine korrigierte Farbanzeige kalibriert ist; und
eine Logik zum Bestimmen, ob die der Verwendung zugeordnete Anzeigeeinrichtung für eine korrigierte Farbanzeige kalibriert ist, um einen ausgewählten Zustand des Flags zu bestimmen.

33. Das client-basierte Icon-Applet nach Anspruch 27, wobei die Logik zum Bestimmen, ob das betrachtete Bild ein Farbbenachrichtigungs-Tag enthält und eine der Verwendung zugeordnete Anzeigeeinrichtung für eine korrigierte Farbanzeige kalibriert ist, zum Einsetzen eines ausgewählten Zustands des in das zu betrachtende digitale Bild einzusetzenden Icons ferner aufweist:
eine Logik zum Einsetzen des Icons, das den ersten Zustand aufweist, der anzeigt, daß betrachtete Bilder farbkorrigiert sind und die der Verwendung zugeordnete Anzeigeeinrichtung für eine korrigierte Farbanzeige kalibriert ist.

34. Das client-basierte Icon-Applet nach Anspruch 27, wobei die Logik zum Bestimmen, ob das betrachtete Bild ein Farbbenachrichtigungs-Tag enthält und eine der Verwendung zugeordnete Anzeigeeinrichtung für eine korrigierte Farbanzeige kalibriert ist, zum Einsetzen eines ausgewählten Zustands des in das zu betrachtende digitale Bild einzusetzenden Icons ferner aufweist:
eine Logik zum Einsetzen des Icons, das den zweiten Zustand aufweist, der anzeigt, daß betrachtete Bilder nicht farbkorrigiert sind oder die der Verwendung zugeordnete Anzeigeeinrichtung nicht für eine korrigierte Farbanzeige kalibriert ist.

35. Das client-basierte Icon-Applet nach Anspruch 28, wobei die Logik zum Bestimmen, ob das betrachtete Bild ein Farbbenachrichtigungs-Tag enthält und eine der Verwendung zugeordnete Anzeigeeinrichtung für eine korrigierte Farbanzeige kalibriert ist, zum Einsetzen eines ausgewählten Zustands des in das zu betrachtende digitale Bild einzusetzenden Icons ferner aufweist:
eine Logik zum Belassen des Icons in dem zweiten, Standard-Zustand, der anzeigt, daß betrachtete Bilder nicht farbkorrigiert sind oder die der Verwendung zugeordnete Anzeigeeinrichtung nicht für eine korrigierte Farbanzeige kalibriert ist.

36. Das client-basierte Icon-Applet nach Anspruch 27, wobei das Icon außerdem eine Farbkorrektur durch einen bestimmten Server identifiziert.

37. Ein server-basiertes Icon-Applet zur Verwendung bei der Anzeige eines Zustands der Farbkorrektur betrachteter digitaler Bilder an einen Endbenutzer, aufweisend:
ein Icon, das einen ersten Zustand aufweist, der anzeigt, daß betrachtete Bilder so, wie sie betrachtet werden, farbkorrigiert sind, und eine zweiten Zustand, der anzeigt, daß betrachtete Bilder so, wie sie betrachtet werden, nicht farbkorrigiert sind; und
eine Logik zum Bestimmen, ob ein Client eine spezielle, bekannte Kalibrierung zum Einsetzen eines ausgewählten Zustands des Icons, das in das zu betrachtende digitale Bild eingesetzt werden soll, aufweist.

38. Das server-basierte Icon-Applet nach Anspruch 37, wobei die Logik zum Bestimmen, ob ein Client eine spezielle, bekannte Kalibrierung zum Einsetzen eines ausgewählten Zustands des Icons, das in das zu betrachtende digitale Bild eingesetzt werden soll, aufweist, ferner umfaßt:
eine Logik zum Bestimmen des Vorhandenseins eines von einem Browser, der dem Client zugeordnet ist, gesendeten HTML-Stroms.

39. Das server-basierte Icon-Applet nach Anspruch 38, wobei die Logik zum Bestimmen des Vorhandenseins eines von einem Browser, der dem Client zugeordnet ist, gesendeten HTML-Stroms ferner aufweist:
eine Logik zum Einsetzen des Icons, das den ersten Zustand aufweist, der anzeigt, daß betrachtete Bilder farbkorrigiert sind, wenn ein HTML-Strom erfaßt wird.

40. Das server-basierte Icon-Applet nach Anspruch 38, wobei die Logik zum Bestimmen des Vorhandenseins eines HTML-Stroms, der von einem dem Client zugeordneten Browser gesendet wird, ferner aufweist:
eine Logik zum Einsetzen des Icons, das den zweiten Zustand aufweist, der anzeigt, daß betrachtete Bilder nicht farbkorrigiert sind, wenn kein HTML-Strom erfaßt wird.

## Revendications

1. Un procédé pour renseigner un utilisateur au sujet de l'état de correction de couleurs d'une image sur un écran d'affichage local, comprenant les étapes consistant à :
déterminer la présence d'une information de correction de couleurs dans ladite image ;
déterminer l'état d'étalonnage dudit système utilisateur ;
notifier audit utilisateur l'état de correction de couleurs, selon lesdites étapes de détermination de la présence d'informations de correction de couleurs dans ladite image, et détermination de l'état d'étalonnage dudit système utilisateur.

2. Le procédé selon la revendication 1, dans lequel ledit procédé est mis en oeuvre dans un processus logiciel, chargé dans un navigateur Internet.

3. Le procédé selon la revendication 1, dans lequel ledit procédé est mis en oeuvre dans un processus logiciel, chargé dans une application de navigation de contenu.

4. Le procédé selon la revendication 1, dans lequel ledit procédé est mis en oeuvre dans un processus logiciel, chargé dans une technologie de serveur qui est visualisée par un client distant.

5. Le procédé selon la revendication 1, dans lequel ledit procédé est mis en oeuvre dans un processus logiciel, chargé dans une technologie de serveur visualisée par un client local.

6. Le procédé selon la revendication 1, dans lequel ledit procédé est mis en oeuvre à la fois en tant que processus logiciel chargé dans une application de navigation de contenu et une technologie de serveur, à peu près simultanément, conjointement avec un mécanisme d'arbitrage, afin de déterminer la notification correcte de l'état.

7. Le procédé selon la revendication 1, dans lequel ladite information de correction de couleurs comprend une information de couleur HTML.

8. Le procédé selon la revendication 1, dans lequel ladite information de l'état d'étalonnage dudit système utilisateur final comprend une information de couleur HTML.

9. Le procédé selon la revendication 1, dans lequel ladite étape de détermination de la présence d'une information de correction de couleurs dans ladite image comprend en outre l'étape consistant à :
détecter si des balises HTML, qui désignent des propriétés de couleur, sont présentes dans une page web associée à ladite image.

10. Le procédé selon la revendication 1, dans lequel ladite étape de détermination de la présence d'une information de correction de couleurs dans ladite image comprend en outre l'étape de détermination si des balises HTML, qui désignent des propriétés de couleur, sont envoyées via un certain serveur, en référençant ladite image envoyée par un serveur différent.

11. Le procédé selon la revendication 1, dans lequel ladite l'information concernant l'étape d'étalonnage dudit système utilisateur est déterminée par ledit serveur, par détection de balises HTML envoyées par ledit serveur.

12. Le procédé selon la revendication 1, dans lequel ladite information de correction de couleurs comprend une information de correction de couleurs à profil ICC.

13. Le procédé selon la revendication 1, dans lequel l'information sur l'état d'étalonnage dudit système utilisateur comprend une information du profil au format ICC.

14. Le procédé selon la revendication 1, dans lequel ladite étape de détermination de la présence d'une information de correction de couleurs dans ladite image comprend en outre l'étape consistant à :
détecter si les profils ICC sont incorporés dans l'image ou associés au fichier, en se basant sur des spécifications de format du profil ICC.

15. Le procédé selon la revendication 1, dans lequel ladite étape de détermination de la présence d'une information de correction de couleurs dans ladite image comprend en outre l'étape consistant à :
détecter des images à format GIF en se basant sur des spécifications de format à profil GIF.

16. Le procédé selon la revendication 1, dans lequel ladite étape de détermination de la présence d'une information de correction de couleurs dans ladite image comprend en outre l'étape consistant à :
détecter des images formatées selon PNG, en se basant sur des spécifications de format à profil PNG.

17. Le procédé selon la revendication 1, dans lequel ladite étape de détermination de la présence d'une information de correction de couleurs dans ladite image comprend en outre l'étape consistant à :
détecter des images ayant été formatées selon JPEG, en se basant sur les spécifications de format de profil JPG.

18. Le procédé selon la revendication 1, dans lequel ladite étape de détermination de la présence d'une information de correction de couleurs dans ladite image comprend en outre l'étape consistant à :
détecter des images dans un espace de couleur connu.

19. Le procédé selon la revendication 1, dans lequel ladite étape de détermination de la présence d'une information de correction de couleurs dans ladite image comprend en outre l'étape consistant à :
détecter des images dans un espace de couleur prédéfini.

20. Le procédé selon la revendication 1, dans lequel ladite étape de notification audit utilisateur de l'état de correction de couleurs selon lesdites étapes de détermination de présence d'une information de correction de couleurs dans ladite image et de détermination de l'état d'étalonnage dudit système utilisateur comprend en outre l'étape consistant à :
fournir une notification visuelle concernant l'état de l'état de correction de couleurs de ladite image.

21. Le procédé selon la revendication 20, dans lequel ladite notification visuelle est une icône.

22. Le procédé selon la revendication 1, dans lequel ladite étape de notification audit utilisateur de l'état de correction de couleurs selon lesdites étapes de détermination de la présence d'une information de correction de couleurs dans ladite image et de détermination de l'état d'étalonnage dudit système utilisateur comprend en outre l'étape consistant à :
fournir une notification audible concernant l'état de l'état de correction de couleurs de ladite image.

23. Le procédé selon la revendication 1, dans lequel ladite étape de notification audit utilisateur de l'état de correction de couleurs selon lesdites étapes de détermination de la présence d'une information de correction de couleurs dans ladite image et de détermination de l'état d'étalonnage dudit système utilisateur comprend en outre l'étape consistant à :
fournir une notification sensorielle concernant l'état de correction de couleurs de ladite image.

24. Le procédé selon la revendication 23, dans lequel ladite étape de fourniture d'une notification sensorielle concernant l'état de correction de couleurs de ladite image comprend en outre l'étape consistant à :
fournir une notification à base tactile concernant l'état de correction de couleurs de ladite image.

25. Le procédé selon la revendication 23, dans lequel ladite étape de fourniture d'une notification sensorielle concernant l'état de l'état de correction de couleurs de ladite image comprend en outre l'étape consistant à :
fournir une notification à base gustative concernant l'état de correction de couleurs de ladite image.

26. Le procédé selon la revendication 23, dans lequel ladite étape de fourniture d'une notification sensorielle concernant l'état de l'état de correction de couleurs de ladite image comprend en outre l'étape consistant à :
fournir une notification à base olfactive concernant l'état de correction de couleurs de ladite image.

27. Une appliquette d'icône à base client utilisée pour indiquer à un utilisateur final un état de correction de couleurs d'images numériques visualisées, comprenant :
une icône ayant un premier état indiquant que des images en cours de visualisation sont soumises à une correction de couleurs au moment de la visualisation et un deuxième état indiquant que dans images en cours de visualisation ne sont pas soumises à correction de couleurs lors de la visualisation ; et
une logique pour déterminer (a) si l'image en cours de visualisation comprend une balise de notification de couleur et (b) un dispositif d'affichage, associé à l'utilisation, est étalonné pour corriger l'affichage couleur, pour insérer un état sélectionné de l'icône à insérer dans l'image numérique à visualiser, dans lequel ladite logique de détermination, si l'image en cours de visualisation comprend une balise de notification de couleur et un dispositif d'affichage associé à l'utilisation est étalonné pour afficher une couleur corrigée pour insertion d'un état sélectionné de l'icône à insérer dans l'image numérique à visualiser, comprend en outre :
une logique pour évaluer des balises HTML envoyées par un serveur afin de déterminer si la dite image a subi une correction de couleurs.

28. L'appliquette d'icône à base client selon la revendication 27, dans laquelle ladite icône est, au lancement, au deuxième état, indiquant que des images en cours de visualisation ne sont pas soumises à une correction de couleurs au moment de la visualisation, en tant qu'état par défaut.

29. L'appliquette d'icône à base client selon la revendication 27, dans laquelle ladite logique d'évaluation de balises HTML envoyées par un serveur pour déterminer si ladite image a été soumise à une correction de couleurs comprend en outre :
une logique pour évaluer des balises de titres HTML prédéterminées, envoyées par un serveur, pour déterminer si ladite image a été soumise à une correction de couleurs.

30. L'appliquette d'icône à base client selon la revendication 27, dans laquelle ladite logique de détermination du fait que l'image en visualisation comprend une balise de notification de couleurs et un dispositif d'affichage associé à l'utilisation est étalonné pour afficher une couleur corrigée pour insertion d'un état sélectionné de l'icône à insérer dans l'image numérique à visualiser, comprend en outre :
une logique pour détecter la présence d'une fonction de transfert dans un système client.

31. L'appliquette d'icône à base client selon la revendication 27, dans laquelle ladite logique de détermination, du fait que l'image en visualisation comprend une balise de notification de couleurs et un dispositif d'affichage associé à l'utilisation est étalonné pour afficher une couleur corrigée pour insertion d'un état sélectionné de l'icône à insérer dans l'image numérique à visualiser, comprend en outre :
une logique pour détecter la présence de paramètres de caractérisation.

32. L'appliquette d'icône à base client selon la revendication 27, comprenant en outre :
un drapeau, ayant un premier état, indiquant que les dispositifs d'affichage associés à l'utilisation sont étalonnés pour afficher une couleur corrigée, et un deuxième état, indiquant que les dispositifs d'affichage associés à l'utilisation ne sont pas étalonnés pour afficher une couleur corrigée ; et
une logique pour déterminer si le dispositif d'affichage associé à l'utilisation est étalonné pour afficher une couleur corrigée, afin de déterminer un état sélectionné du drapeau.

33. L'appliquette d'icône à base client selon la revendication 27, dans laquelle ladite logique de détermination du fait que l'image en cours de visualisation comprend une balise de notification de couleurs et un dispositif d'affichage associé à l'utilisation est étalonné pour afficher une couleur corrigée pour insertion d'un état sélectionné de l'icône à insérer dans l'image numérique à visualiser, comprend en outre :
une logique pour insérer l'icône ayant le premier état, indiquant que des images en cours de visualisation sont soumises à correction de couleurs et que le dispositif d'affichage associé à l'utilisation est étalonné pour afficher une couleur corrigée.

34. L'appliquette d'icône à base client selon la revendication 27, dans laquelle ladite logique, pour déterminer si l'image en cours de visualisation comprend une balise de notification de couleurs et qu'un dispositif d'affichage associé à l'utilisation est étalonné pour afficher une couleur corrigée pour insertion d'un état sélectionné de l'icône à insérer dans l'image numérique à visualiser, comprend en outre :
une logique pour insérer l'icône, ayant le deuxième état indiquant que des images en cours de visualisation ne sont pas soumises à une correction de couleurs ou que le dispositif d'affichage associé à l'utilisation n'est pas étalonné pour afficher une couleur corrigée.

35. L'appliquette d'icône à base client selon la revendication 28, dans laquelle ladite logique de détermination du fait que l'image en visualisation comprend une balise de notification de couleurs et un dispositif d'affichage associé à l'utilisation est étalonné pour afficher une couleur corrigée pour insertion d'un état sélectionné de l'icône à insérer dans l'image numérique à visualiser, comprend en outre :
une logique pour laisser l'icône au deuxième état par défaut, indiquant que des images en cours de visualisation ne sont pas soumises à correction de couleurs ou que le dispositif d'affichage associé à l'utilisation n'est pas étalonné pour afficher une couleur corrigée.

36. L'appliquette d'icône à base client selon la revendication 27, dans laquelle ladite icône identifie également une correction de couleurs faite par un serveur particulier.

37. Une appliquette d'icône à base serveur pour utilisation dans l'indication, à un utilisateur final, d'un état d'une correction de couleurs d'images numériques en cours de visualisation, comprenant :
une icône ayant un premier état indiquant que des images en cours de visualisation sont soumises à une correction de couleurs lors de la visualisation et un deuxième état indiquant que des images en cours de visualisation ne sont pas soumises à correction de couleurs lors de la visualisation ; et
une logique, pour déterminer si un client a un étalonnage connu, spécifique, pour insertion d'un état sélectionné de l'icône à insérer dans l'image numérique à visualiser.

38. L'appliquette d'icône à base serveur selon la revendication 37, dans laquelle ladite logique de détermination du fait qu'un client a un étalonnage connu spécifique pour insertion d'un état sélectionné de l'icône à insérer dans l'image numérique à visualiser comprend en outre :
une logique pour déterminer la présence d'un flux HTML envoyé par un navigateur associé audit client.

39. L'appliquette d'icône à base client selon la revendication 38, dans laquelle ladite logique de détermination de la présence d'un flux HTML, envoyé par un navigateur associé audit client, comprend en outre :
une logique pour insertion de l'icône ayant le premier état, indiquant que des images en cours de visualisation sont soumises à correction de couleurs lorsqu'un flux HTML est détecté.

40. L'appliquette d'icône à base client selon la revendication 38, dans laquelle ladite logique de détermination de la présence d'un flux HTML, envoyé par un navigateur associé audit client, comprend en outre :
une logique pour insérer de l'icône ayant le deuxième état, indiquant que des images en cours de visualisation ne sont soumises pas à correction de couleurs lorsqu'un flux HTML n'est pas détecté.
